# EUROPÄISCHE PATENTSCHRIFT

(11) **EP 2 316 319 B1**
(45) Veröffentlichungstag und Bekanntmachung des Hinweises auf die Patenterteilung: **16.12.2015**
(21) Anmeldenummer: 10188924.4
(22) Anmeldetag: 26.10.2010
(51) Int. Cl.: A47J 47/14, A47G 23/06, A47J 39/00

(54) **Einrichtung zur Speisenverteilung**
Device for distributing food
Dispositif de répartition de plats

(30) Priorität: 29.10.2009 DE 102009051164
(43) Veröffentlichungstag der Anmeldung: 04.05.2011
(73) Patentinhaber: HUPFER Metallwerke GmbH & Co. KG, 48653 Coesfeld (DE)
(72) Erfinder:
(74) Vertreter: Albrecht, Rainer Harald

(56) Entgegenhaltungen:
- US-A- 3 952 794
- US-A- 4 279 354
- US-A- 4 386 703

## Beschreibung

Die Erfindung betrifft eine Einrichtung zur Speisenverteilung bestehend aus einem rechteckförmigen, stapelbaren Tablett aus Kunststoff und Geschirrkomponenten zur Tablettbestückung. Die Geschirrkomponenten können insbesondere aus Porzellan oder Steingut bestehen.

Im Rahmen der Speisenverteilung wird das mit Geschirrkomponenten bestückte Tablett in Großküchengeräte oder Transportwagen eingebracht, die von einer Trennwand thermisch getrennte Räume aufweisen können. Dabei wird das Tablett in einen frontseitig offenen Schlitz der Trennwand eingeschoben, so dass das Tablett sich in zwei thermisch voneinander getrennte und zumeist unterschiedlich temperierte Räume erstreckt.

Aus EP 1 518 487 A1 ist ein Tablett für die vorgenannte Anwendung bekannt. Das Tablett weist eine ebene Auflagefläche auf, die sich bis zu den Rändern des Tabletts erstreckt. An den längeren Seiten des rechteckförmigen Tabletts ist der als Kragen ausgebildete Rand unterbrochen, so dass das Tablett in die Schlitze einer Trennwand eingeschoben werden kann.

Die US 2,279,354 offenbart eine Tablettanordnung mit einem Tablett und mehreren verschließbaren Behältern, welche zum gemeinsamen Gebrauch geeignet sind. Das Tablett weist dabei nach innen geneigte Seitenwände auf sowie ein Trennelement mit ebenfalls geneigten Wänden, die jeweils mit entsprechend geneigten Außenwänden der Behälter in Eingriff treten können.

Aus DE 199 05 563 A1 ist ein Tablett für die Speisenverteilung bekannt, welches in muldenförmigen Vertiefungen zwei im Wesentlichen gleich große Ablageflächen für Geschirrkomponenten aufweist. Die Ablageflächen des Tabletts sind durch einen parallel zur Schmalseite des Tabletts angeordneten Steg räumlich getrennt. Der Steg weist an seiner Unterseite eine rinnenförmige Vertiefung auf und kann in Schlitze einer Trennwand eingeschoben werden.

Das Tablett kann z. B. im Rahmen der Speisenverteilung in Krankenhäusern, Altenheimen und dergleichen mit unterschiedlichen Geschirrkomponenten bestückt werden, wobei bei der Tablettbestückung auch individuellen Wünschen bezüglich der Zusammenstellung der Mahlzeiten Rechnung zu tragen ist. Für die Tablettbestückung werden Teller, Schalen, Setplatten und dergleichen in unterschiedlichen Größen und Formen eingesetzt und zumeist individuell kombiniert. Dabei wird die Ablagefläche des Tabletts nur unvollkommen ausgenutzt. Die unzureichende Flächenausnutzung ist insbesondere dann problematisch, wenn das Tablett in Großküchengeräten und Tabletttransportwagen eingesetzt werden soll, die eine Klimatrennwand zur Aufteilung in eine Warmzone und eine Kaltzone aufweisen, und folglich auf dem Tablett sowohl für die warm zu haltenden Speisen als auch für die zu kühlenden Speisen nur eine begrenzte Teilfläche zur Verfügung steht.

Vor diesem Hintergrund liegt der Erfindung die Aufgabe zugrunde, bei der Bestückung eines rechteckförmigen, stapelbaren Tabletts mit Geschirrkomponenten aus Porzellan oder Steingut eine optimale Raumausnutzung auf dem Tablett sicher zu stellen. Dabei soll mit wenigen unterschiedlichen Geschirrkomponenten eine variable Tablettbestückung möglich sein, die individuell festgelegten Zusammenstellungen der Mahlzeiten Rechnung tragen. Ferner soll das mit Geschirrkomponenten bestückten Tablett zur Verwendung in Großküchengeräten und Tabletttransportwagen geeignet sein, die eine Klimatrennwand aufweisen.

Gegenstand der Erfindung und Lösung dieser Aufgabe ist eine Einrichtung zur Speisenverteilung nach Anspruch 1. Ein rechteckförmiges, stapelbares Tablett aus Kunststoff und Geschirrkomponenten zur Tablettbestückung bilden erfindungsgemäß ein aufeinander abgestimmtes System. Die Geschirrkomponenten bestehen vorzugsweise aus Porzellan oder Steingut und sind erfindungsgemäß Teile eines Elementensatzes, der rechteckförmige Schalen als Basiskomponenten und weitere rechteckförmige Systemkomponenten umfasst. Dabei sind die Abmessungen der Systemkomponenten so gewählt, dass die Systemkomponenten jeweils im Austausch gegen zwei nebeneinander angeordneten Basiskomponenten oder im Austausch gegen vier im Quadrat angeordneten Basiskomponenten auf dem Tablett Platz finden. Das Tablett ist auf die vorgenannten Elemente abgestimmt und weist zwei durch einen Steg räumlich getrennte Ablageflächen auf, auf denen jeweils eine Mehrzahl von Basiskomponenten angeordnet werden können. Die Größe der Ablageflächen des Tabletts sind ebenso wie die unterschiedlichen Systemkomponenten von der Basiskomponente abgeleitet, welche die kleinste Geschirrkomponente bildet und als rechteckförmige Schale ausgebildet ist. Die Ablageflächen sind so dimensioniert, dass die Abmessungen der beiden Ablageflächen sowohl in Querrichtung als auch in Längsrichtung des Tabletts um maximal 10 % größer sind als die Summe der Außenabmessungen von nebeneinander angeordneten Basiskomponenten bei einer Belegung der Ablageflächen mit der größtmöglichen Anzahl von Basiskomponenten.

Der die Ablageflächen räumlich trennende Steg ist insbesondere parallel zur Schmalseite des Tabletts angeordnet. Gemäß einer bevorzugten Ausführung der Erfindung weist das Tablett eine zur Aufnahme von zwölf Basiskomponenten geeignete, im Wesentlichen quadratische Ablagefläche auf, deren Abmessungen mit einem Übermaß von maximal 10 % der vierfachen Breite und der dreifachen Länge der Basiskomponenten entsprechen. Die zweite Ablagefläche des Tabletts kann vier Basiskomponenten aufnehmen, die mit ihrer längeren Seite nebeneinander auf der zweiten Ablagefläche Platz finden. Die im Wesentlichen quadratische erste Ablagefläche kann insbesondere für Geschirrkomponenten mit warm zu haltenden Speisen genutzt werden, wobei als Geschirrkomponenten Basiskomponenten und Systemkomponenten jeweils unter optimaler Raumausnutzung vielfältig miteinander kombiniert werden können. Die zweite, rechteckförmige Ablagefläche ist für die Aufnahme einer geringeren Zahl von Basiskomponenten ausgelegt und kann für Basiskomponenten mit kühl zu haltenden Speisen genutzt werden.

Die erfindungsgemäße Einrichtung zur Speisenverteilung beruht auf dem Gedanken, das Kunststofftablett und die aus Porzellan oder Steingut bestehenden Geschirrkomponenten als modulares System aufeinander abzustimmen. Gemäß einer bevorzugten Ausführung der erfindungsgemäßen Lehre sind auf dem Tablett zwei unterschiedlich große Ablageflächen vorgesehen, die bei optimaler Flächenausnutzung zwölf Basiskomponenten bzw. vier Basiskomponenten aufnehmen. Auf der im Wesentlichen quadratischen Ablagefläche des Tabletts können die Basiskomponenten wahlweise in drei Reihen und vier Spalten oder in vier Reihen und drei Spalten angeordnet werden. Ferner ist es möglich, jeweils Gruppen aus zwei Basiskomponenten oder vier Basiskomponenten durch entsprechend dimensionierte Systemkomponenten zu ersetzen. Dies ermöglicht eine sehr variable Anordnung von Geschirrkomponenten für warm zu haltende Speisen, und zwar bei nahezu vollständiger Flächenausnutzung der Ablagefläche des Tabletts. Die Abmessungen der ersten Ablagefläche weisen ein Übermaß von maximal 10 % auf, bezogen auf den Wert, der sich aus der Summe der Abmessungen der nebeneinander platzierten Basiskomponenten ergibt. Im Rahmen der angegebenen Toleranzen kann auch die Form der ersten Ablagefläche von einem Quadrat abweichen. Eine noch im Wesentlichen quadratische Fläche liegt im Rahmen der Erfindung noch dann vor, wenn die Erstreckung der Ablagefläche in einer Richtung um bis zu 10 % von der Erstreckung in der anderen Richtung abweicht. Die zulässigen Abweichungen, die noch von dem Systemgedanken erfasst sind, geben einen Gestaltungsspielraum bei der Ausbildung des Tablettenrandes und/oder des zwischen den Ablageflächen angeordneten Stegs, wenn genormte Außenabmessungen des Tabletts eingehalten werden müssen.

Die muldenförmigen Vertiefungen des Tabletts können schräge Wandflächen aufweisen, die mit Rundungen an die ebenen Ablageflächen für die Geschirrkomponenten anschließen. Die Rundungen sind nicht Teil der Ablageflächen und sind bei der Feststellung der Abmessungen der Ablageflächen nicht zu berücksichtigen.

Das Tablett weist zweckmäßig einen Rand mit einer ebenen Spiegelfläche auf. Dabei endet der Trennsteg vorzugsweise auf dem Niveau der Spiegelfläche und ist mit einer rinnenförmigen Vertiefung versehen, die sich über die gesamte Länge des Trennstegs erstreckt. Die rinnenförmige Vertiefung ist vorzugsweise an der Oberseite des Tabletts angeordnet. Beim Einschieben des Tabletts in den Schlitz einer Klimatrennwand kann die an der Oberseite des Tabletts sichtbare Nut zur Orientierungshilfe genutzt werden, was das Einschieben des Tabletts in die Klimatrennwand erleichtert.

Die rechteckförmigen Schalen, welche die Basiskomponente des Systems darstellen, können sich nach unten zur Standfläche hin verjüngen. An ihrer Außenseite weisen sie vorzugsweise einen umlaufenden Kragen auf, der die für die Tablettbestückung maßgebenden Außenabmessungen definiert und eine vertikale Außenfläche bildet, die sich von dem oberen Rand der Schale über einen Teil der Schalenhöhe erstreckt.

Die Systemkomponenten, die anstelle von zwei oder vier Basiskomponenten auf dem Tablett abgestellt werden können, umfassen vorzugsweise Schalen für Speisen und Setplatten mit mindestens einer Ausprägung in der Bodeninnenfläche. Die Systemkomponenten können sich nach unten verjüngen. Sie weisen an ihrer Außenseite ebenfalls vorzugsweise einen umlaufenden Kragen auf, der die für die Tablettbestückung maßgebenden Außenabmessungen der Systemkomponenten definiert und vertikale Außenflächen bildet, die sich vom oberen Rand der Systemkomponente über einen Teil der Höhe der Systemkomponente erstrecken. Durch den erfindungsgemäßen Systemgedanken sind die am oberen Rand der Systemkomponenten gemessenen Außenabmessungen festgelegt. Die Höhe der beispielsweise als Schalen oder Setplatten ausgebildeten Systemkomponenten ist hingegen frei wählbar und kann individuell festgelegt werden.

Gemäß einer bevorzugten Ausführung der Erfindung gehören zu den Systemkomponenten auch rechteckförmige Teller, die sich nach unten verjüngen und an ihrer Außenseite einen umlaufenden Kragen aufweisen, der die für die Tablettbestückung maßgebenden Außenabmessungen definiert. Die Teller bilden zweckmäßig Systemkomponenten, die im Austausch von vier Basiskomponenten auf dem Tablett platziert werden können.

Sowohl die Basiskomponenten als auch die Systemkomponenten können Deckel aufweisen. Die Deckel für die Basiskomponenten und Systemkomponenten, die als Schalen ausgebildet sind, sind zweckmäßig an der Innenseite der betreffenden Geschirrkomponente zentriert. Als Teller ausgebildete Systemkomponenten erhalten zweckmäßig einen außen zentrierenden Deckel.

Das Tablett weist vorzugsweise genormte Außenabmessungen von 530 mm x 370 mm auf.

Im Folgenden wird die Erfindung anhand von Ausführungsbeispielen erläutert. Es zeigen schematisch:
- **Fig. 1**: eine Einrichtung zur Speisenverteilung mit einem rechteckförmigen, stapelbaren Tablett aus Kunststoff und einer Tablettbestückung mit Geschirrkomponenten aus Porzellan oder Steingut,
- **Fig. 2a und 2b**: Variationen der Tablettbestückung zur Verdeutlichung des erfindungsgemäßen, modularen Systemgedankens,
- **Fig. 3**: Geschirrkomponenten eines Elementensatzes zur Verwendung für die in Fig. 1 dargestellte Einrichtung zur Speisenverteilung,
- **Fig. 4 und 5**: Schnittdarstellungen von Geschirrkomponenten für die in Fig. 1 dargestellte Einrichtung zur Speisenverteilung.

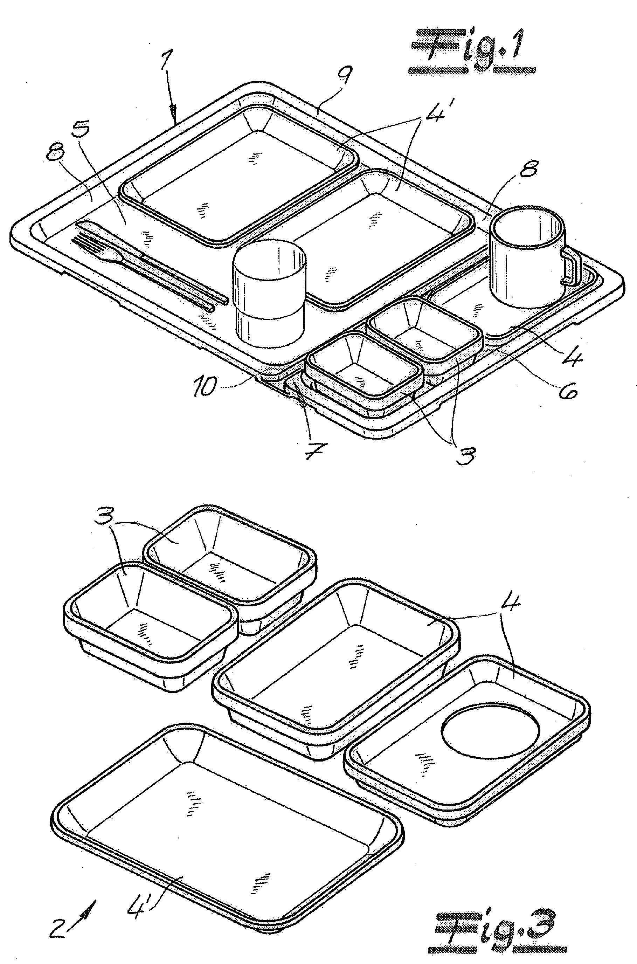

Die Fig. 1 zeigt ein rechteckförmiges, stapelbares Tablett 1 aus Kunststoff und eine Tablettbestückung mit Geschirrkomponenten aus Porzellan oder Steingut. Die Geschirrkomponenten sind Teile eines Elementensatzes 2, der rechteckförmige Schalen als Basiskomponenten 3 und weitere rechteckförmige Systemkomponenten 4, 4' umfasst. Die Geschirrkomponenten und das Tablett bilden ein aufeinander abgestimmtes modulares System. Die Tablettbestückung ist unter Verwendung der Basiskomponenten und Systemkomponenten individuell festlegbar. Das in Fig. 1 dargestellte Ausführungsbeispiel lässt erkennen, dass je nach Tablettbestückung auf dem Tablett Freiflächen verbleiben können, die zur Ablage von Besteck, Gläsern und dergleichen genutzt werden können. Besteck und Gläser sind nicht Bestandteil des erfindungsgemäßen Elementensatzes 2.

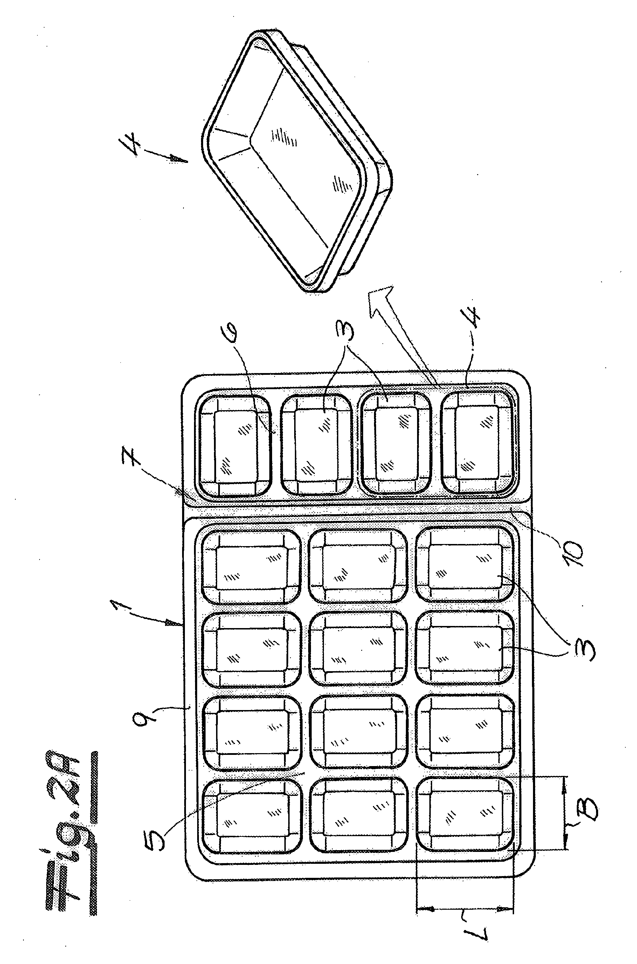

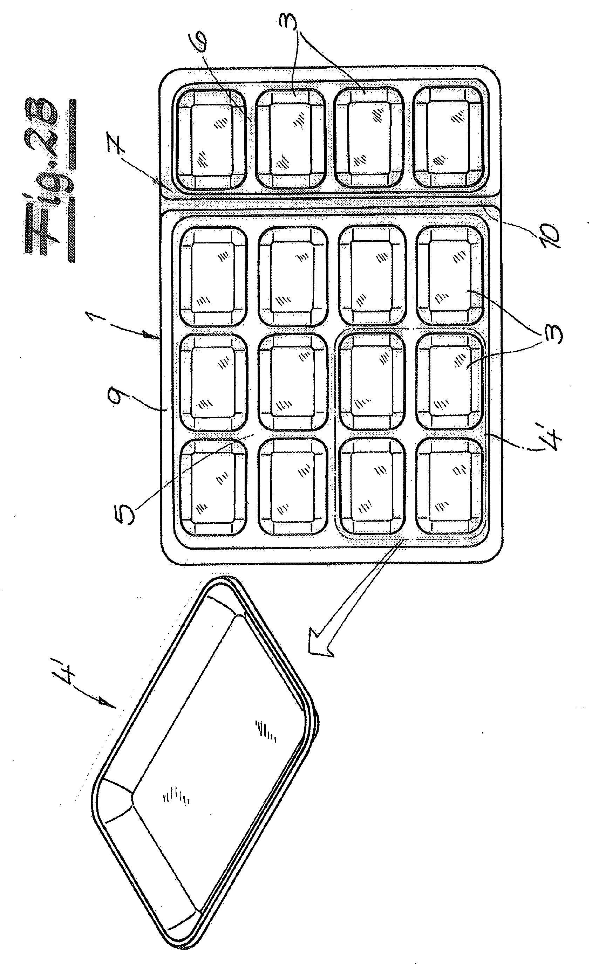

Aus einer vergleichenden Betrachtung der Fig. 1 sowie insbesondere der Fig. 2a und 2b geht hervor, dass die Abmessungen der Systemkomponenten 4, 4' so gewählt sind, dass die Systemkomponenten 4, 4' jeweils im Austausch gegen zwei an ihren längeren Seiten nebeneinander angeordneten Basiskomponenten 3 oder im Austausch von vier im Quadrat angeordneten Basiskomponenten 3 auf dem Tablett Platz finden. Den Fig. 2a und 2b entnimmt man ferner, dass das Tablett 1 eine zur Aufnahme von zwölf Basiskomponenten 3 geeignete erste, im Wesentlichen quadratische Ablagefläche 5 aufweist. Die Abmessungen der Ablagefläche 5 entsprechen mit einem Übermaß von maximal 10 % der vierfachen Breite B und der dreifachen Länge L der Basiskomponenten 3, so dass die Basiskomponenten 3 wahlweise in drei Reihen aus jeweils vier Basiskomponenten (Fig. 2a) oder in vier Reihen aus jeweils drei Basiskomponenten (Fig. 2b) auf der im Wesentlichen quadratischen Ablagefläche 5 platziert werden können. Ohne die erfindungsgemäße Lehre zu verlassen, können die Abmessungen der quadratischen Fläche in Längsrichtung und Querrichtung um bis zu 10 % variieren. Das Tablett weist ferner eine zweite rechteckförmige Ablagefläche 6 für vier Basiskomponenten 3 auf, die mit ihrer längeren Seite nebeneinander auf der zweiten Ablagefläche 6 Platz finden. Die Ablageflächen 5, 6 sind als ebene Flächen in muldenförmigen Vertiefungen des Tabletts 1 angeordnet und durch einen parallel zur Schmalseite des Tabletts angeordneten Steg 7 räumlich getrennt.

Die muldenförmigen Vertiefungen des Tabletts weisen schräge Wandflächen 8 auf, die mit Rundungen an die ebenen Ablageflächen 5, 6 für die Geschirrkomponenten anschließen. Die Rundungen sind nicht Teil der Ablageflächen 5, 6. Bei der Ermittlung der Abmessungen der Ablageflächen 5, 6 sind die Rundungen nicht zu berücksichtigen. Das Tablett 1 weist einen Rand 9 mit einer ebenen Spiegelfläche auf. Der Steg 7 endet auf dem Niveau dieser Spiegelfläche und ist an der Oberseite des Tabletts mit einer rinnenförmigen Vertiefung 10 versehen, die sich über die gesamte Länge des Stegs 7 erstreckt. Das Tablett 1 kann an seinem Steg 7 in den Schlitz einer Klimatrennwand eingeschoben werden, welche unterschiedliche temperierte Zonen in einem Großküchengerät oder einem Tabletttransportwagen thermisch trennt. Die im Wesentlichen quadratische Ablagefläche 5 des Tabletts 1 ist zweckmäßig mit Geschirrkomponenten für warme Speisen bestückt, während auf der zweiten, kleineren Ablagefläche 6 Geschirrkomponenten mit kühl zu haltenden Speisen platziert werden.

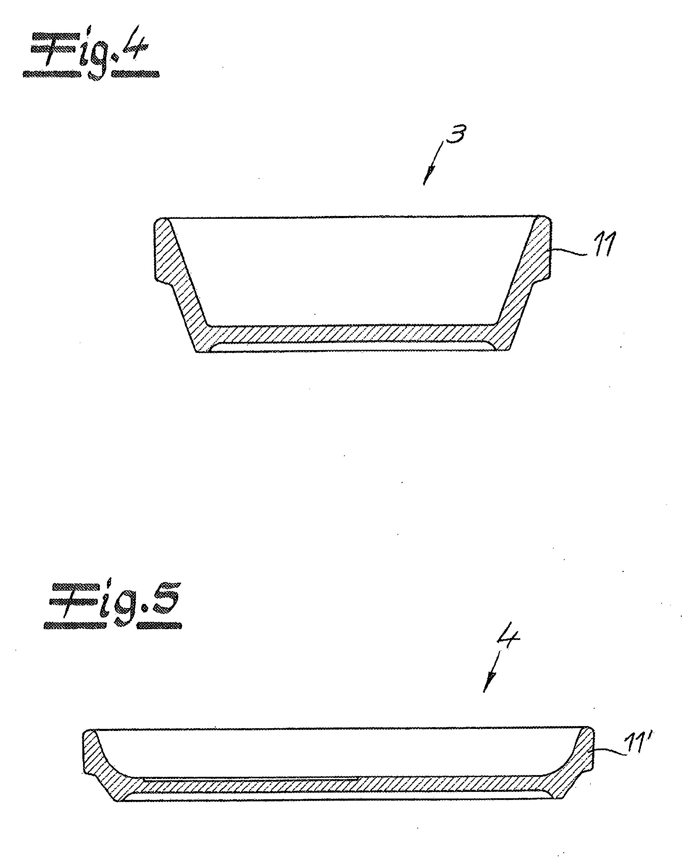

Die Basiskomponenten 3 bestehen aus rechteckförmigen Schalen, die entsprechend der Darstellung in Fig. 4 sich nach unten zur Standfläche verjüngen und an ihrer Außenseite einen umlaufenden Kragen 11 aufweisen. Dieser Kragen 11 definiert die für die Tablettbestückung maßgebenden Außenabmessungen und bildet eine vertikale Außenfläche, die sich über einen Teil der Schalenhöhe erstreckt.

Die Systemkomponenten 4 umfassen gemäß der Darstellung in Fig. 3 Schalen für Speisen und Setplatten mit mindestens einer Ausprägung in der Bodenfläche. Der Schnittdarstellung in Fig. 5 ist zu entnehmen, dass auch die Systemkomponenten 4 z. B. in Form einer Setplatte sich nach unten verjüngen und an ihrer Außenseite einen umlaufenden Kragen 11' aufweisen, der die für die Tablettbestückung maßgebenden Außenabmessungen definiert und eine sich über einen Teil der Höhe der Systemkomponente erstreckende vertikale Außenfläche bildet. Die Setplatten und schalenförmigen Systemkomponenten 4 sind im Austausch von zwei Basiskomponenten 3 auf dem Tablett 1 platzierbar, wobei ein solcher Austausch sowohl auf der ersten, im Wesentlichen quadratischen Ablagefläche 5 als auch auf der zweiten Ablagefläche 6 vorgenommen werden kann.

Der Elementensatz 2 umfasst schließlich als weitere Systemkomponente 4' rechteckförmige Teller, die sich ebenfalls nach unten verjüngen, und an ihrer Außenseite einen umlaufenden Kragen aufweisen, der die für die Tablettbestückung maßgebenden Außenabmessungen definiert.

## Patentansprüche

1. Einrichtung zur Speisenverteilung mit einem rechteckförmigen, stapelbaren Tablett (1) aus Kunststoff und mit Geschirrkomponenten zur Tablettbestückung,
wobei die Geschirrkomponenten Teile eines Elementensatzes (2) sind, der rechteckförmige Schalen als Basiskomponenten (3) und zumindest zwei weitere rechteckförmige Systemkomponenten (4, 4') umfasst,
wobei die Abmessungen der Systemkomponenten (4, 4') so gewählt sind, dass die ersten Systemkomponenten (4) jeweils im Austausch gegen zwei nebeneinander angeordneten Basiskomponenten (3) und die zweiten Systemkomponente (4') im Austausch gegen vier im Quadrat angeordneten Basiskomponenten (3) auf dem Tablett (1) Platz finden,
wobei das Tablett (1) zwei durch einen Steg (7) räumlich getrennte Ablageflächen (5, 6) aufweist, auf denen jeweils eine Mehrzahl der Basiskomponenten (3) angeordnet werden können, und
wobei die Abmessungen der beiden Ablageflächen (5, 6) sowohl in Querrichtung als auch in Längsrichtung des Tabletts (1) um maximal 10 % größer sind als die Summe der Außenabmessungen von nebeneinander angeordneten Basiskomponenten (3) bei einer Belegung der Ablageflächen (5, 6) mit der größtmöglichen Anzahl von Basiskomponenten (3).

2. Einrichtung zur Speisenverteilung nach Anspruch 1, wobei der Steg (7) parallel zur Schmalseite des Tabletts (1) angeordnet ist.

3. Einrichtung zur Speisenverteilung nach Anspruch 1 oder 2, wobei das Tablett (1) eine zur Aufnahme von zwölf Basiskomponenten (3) geeignete, im Wesentlichen quadratische Ablagefläche (5) aufweist, deren Abmessungen mit einem Übermaß von maximal 10 % der vierfachen Breite und der dreifachen Länge der Basiskomponenten (3) entsprechen, und wobei das Tablett (1) eine zweite Ablagefläche (6) für vier Basiskomponenten aufweist, die mit ihrer längeren Seite nebeneinander auf der zweiten Ablagefläche (6) Platz finden.

4. Einrichtung zur Speisenverteilung nach einem der Ansprüche 1 bis 3, wobei die Ablageflächen (5, 6) als ebene Flächen in muldenförmigen Vertiefungen des Tabletts (1) angeordnet sind, wobei die muldenförmigen Vertiefungen schräge Wandflächen (8) aufweisen, die mit Rundungen an die ebenen Ablageflächen (5, 6) für die Geschirrkomponenten anschließen.

5. Einrichtung zur Speisenverteilung nach einem der Ansprüche 1 bis 4, wobei das Tablett einen Rand (9) mit einer ebenen Spiegelfläche aufweist und wobei der Steg (7) auf dem Niveau der Spiegelfläche endet und mit einer sich über die gesamte Länge des Stegs (7) erstreckenden rinnenförmigen Vertiefung (10) versehen ist.

6. Einrichtung zur Speisenverteilung nach einem der Ansprüche 1 bis 5, wobei die rechteckförmigen Schalen (3) sich nach unten zur Standfläche verjüngen und an ihrer Außenseite einen umlaufenden Kragen (11) aufweisen, der die für die Tablettbestückung maßgebenden Außenabmessungen definiert und eine vertikale Außenfläche bildet, welche sich über einen Teil der Schalenhöhe erstreckt.

7. Einrichtung zur Speisenverteilung nach einem der Ansprüche 1 bis 5, wobei die Systemkomponenten (4, 4') Schalen für Speisen und Setplatten (4) mit mindestens einer Ausprägung in der Bodeninnenfläche umfassen, die sich nach unten verjüngen und an ihrer Außenseite einen umlaufenden Kragen (11') aufweisen, wobei der Kragen (11') die für die Tablettbestückung maßgebenden Außenabmessungen der Systemkomponenten (4) definiert und eine vertikale Außenfläche bildet, die sich über einen Teil der Höhe der Systemkomponente erstreckt.

8. Einrichtung zur Speisenverteilung nach einem der Ansprüche 1 bis 7, wobei die Systemkomponenten (4, 4') rechteckförmige Teller (4') umfassen, die sich nach unten verjüngen und an ihrer Außenseite einen umlaufenden Kragen aufweisen, wobei der Kragen die für die Tablettbestückung maßgebenden Außenabmessungen definiert.

9. Einrichtung zur Speisenverteilung nach einem der Ansprüche 1 bis 8, wobei das Tablett (1) genormte Außenabmessungen von 530 mm x 370 mm aufweist.

## Claims

1. A device for distributing food comprising a rectangular, stackable serving tray (1) made out of plastic and flatware components for placement on the serving tray,
wherein the flatware components are part of an element set (2), which encompasses rectangular bowls as the base components (3), and at least two additional rectangular system components (4, 4'),
wherein the dimensions of the system components (4, 4') are selected in such a way that the respective first system components (4) find room on the serving tray (1) in exchange for two adjacent base components (3), and the second system component (4') in exchange for four base components (3) arranged in a square,
wherein the serving tray (1) exhibits two support surfaces (5, 6) spatially separated by a web (7), on which a respective plurality of the base components (3) can be arranged, and
wherein the dimensions of the two support surfaces (5, 6) in both the transverse direction and longitudinal direction of the serving tray (1) are a maximum of 10% larger than the sum of outer dimensions for adjacent base components (3) when allocating the highest possible number of base components (3) on the support surfaces (5, 6).

2. The food distribution device according to claim 1, wherein the web (7) is arranged parallel to the narrow side of the serving tray (1).

3. The food distribution device according to claim 1 or 2, wherein the serving tray (1) exhibits an essentially quadratic support surface (5) that is suitable for accommodating twelve base components (3), and whose dimensions correspond to four times the width and three times the length of the base components (3) with an excess of at most 10%, and wherein the serving tray (1) exhibits a second support surface (6) for four base components, the longer sides of which are situated adjacent to each other on the second support surface (6).

4. The food distribution device according to one of claims 1 to 3, wherein the support surfaces (5, 6) are arranged as flat surfaces in trough-like depressions in the serving trays (1), wherein the trough-shaped depressions exhibit inclined wall surfaces (8), curvatures of which adjoin the flat support surfaces (5, 6) for the flatware components.

5. The food distribution device according to one of claims 1 to 4, wherein the serving tray exhibits an edge (9) with a flat mirror surface, and wherein the web (7) ends at the level of the mirror surface, and is provided with a grooved depression (10) that extends over the entire length of the web (7).

6. The food distribution device according to one of claims 1 to 5, wherein the rectangular bowls (3) downwardly taper toward the stand space and exhibit a continuous collar (11) on their exterior side, which defines the outer dimensions of relevance for placement on the serving tray, and forms a vertical outer surface that extends over part of the bowl height.

7. The food distribution device according to one of claims 1 to 5, wherein the system components (4, 4') encompass bowls for meals and set plates (4) with at least one shaping in the inner surface of the floor, which downwardly taper and exhibit a continuous collar (11') on their exterior side, wherein the collar (11') defines the outer dimensions of the system components (4) of relevance for placement on the serving tray, and forms a vertical outer surface that extends over part of the system component height.

8. The food distribution device according to one of claims 1 to 7, wherein the system components (4, 4') encompass rectangular plates (4'), which downwardly taper and exhibit a continuous collar on their exterior side, wherein the collar defines the outer dimensions of relevance for placement on the serving tray.

9. The food distribution device according to one of claims 1 to 8, wherein the serving tray (1) exhibits standardized outer dimensions of 530 mm x 370 mm.

## Revendications

1. Dispositif de répartition de plats, avec un plateau (1) rectangulaire empilable en plastique et avec des composants de vaisselle pour le garnissage du plateau,
dans lequel les composants de vaisselle font partie d'un jeu d'éléments (2) comprenant des tasses rectangulaires comme composants de base (3) et au moins deux autres composants de système rectangulaires (4, 4"),
dans lequel les dimensions des composants de système (4, 4') sont choisies de telle façon que les premiers composants de système (4) trouvent leur place sur le plateau (1) respectivement en échange de deux composants de base (3) agencés côte à côte, et les deuxièmes composants de système (4') trouvent leur place en échange de quatre composants de base (3) agencés en carré,
dans lequel le plateau (1) comprend deux surfaces de dépôt (5, 6) séparées spatialement par une traverse (7), sur chacune desquelles une pluralité de composants de base (3) peut être disposée, et
dans lequel les dimensions des deux surfaces de dépôt (5, 6) sont plus grandes de 10% maximum que la somme des dimensions extérieures de composants de base (3) disposés côte à côte, aussi bien dans la direction transversale que dans la direction longitudinale du plateau (1), lors d'une occupation des surfaces de dépôt (5, 6) avec le plus grand nombre possible de composants de base (3).

2. Dispositif selon la revendication 1, dans lequel la traverse (7) est agencée parallèlement au côté étroit du plateau (1).

3. Dispositif selon la revendication 1 ou 2, dans lequel le plateau (1) comprend une surface de dépôt essentiellement carrée (5) adaptée pour recevoir douze composants de base (3), dont les dimensions correspondent à une surmesure maximale de 10% de quatre fois la largeur et de trois fois la longueur des composants de base (3), et dans lequel le plateau (1) comprend une deuxième surface de dépôt (6) pour quatre composants de base trouvant leur place avec leurs côtés plus longs côte à côte sur la deuxième surface de dépôt (6).

4. Dispositif selon l'une des revendications 1 à 3, dans lequel les surfaces de dépôt (5, 6) sont agencées en tant que surfaces planes dans des renfoncements en forme d'auges du plateau (1), les renfoncements en forme d'auges présentant des surfaces de paroi inclinées (8) prolongeant les surfaces de dépôt planes (5, 6) avec des arrondis pour les composants de vaisselle.

5. Dispositif selon l'une des revendications 1 à 4, dans lequel le plateau présente un bord (9) avec une surface réfléchissante plane, et dans lequel la traverse (7) se termine au niveau de la surface réfléchissante et est pourvue d'un renfoncement en forme de gouttière (10) s'étendant sur toute la longueur de la traverse (7).

6. Dispositif selon l'une des revendications 1 à 5, dans lequel les tasses rectangulaires (3) s'affinent vers le bas en direction de la surface d'appui et présentent un col périphérique (11) sur leur côté extérieur, lequel définit les dimensions extérieures déterminantes pour le garnissage du plateau et forme une surface extérieure verticale s'étendant sur une partie de la hauteur de tasse.

7. Dispositif selon l'une des revendications 1 à 5, dans lequel les composants de système (4, 4') comprennent des tasses pour des repas et des plaques de kit (4) avec au moins un relief dans la surface intérieure de fond, qui s'affinent vers le bas et présentent un col périphérique (11') sur leur côté extérieur, le col (11') définissant des dimensions extérieures des composants de système (4) qui sont déterminantes pour le garnissage du plateau, et formant une surface extérieure verticale s'étendant sur une partie de la hauteur des composants de système.

8. Dispositif selon l'une des revendications 1 à 7, dans lequel les composants de système (4, 4') comprennent des assiettes rectangulaires (4') s'affinant vers le bas et pourvues d'un col périphérique sur leur côté extérieur, le col définissant les dimensions extérieures déterminantes pour le garnissage du plateau.

9. Dispositif selon l'une des revendications 1 à 8, dans lequel le plateau (1) présente des dimensions extérieures normées de 530 mm x 370 mm.
